(19) Europäisches Patentamt / European Patent Office / Office européen des brevets

(11) **EP 3 252 670 A1**

(12) **EUROPÄISCHE PATENTANMELDUNG**

(43) Veröffentlichungstag:
06.12.2017 Patentblatt 2017/49

(51) Int Cl.:
*G06K 9/34* (2006.01)    *G06K 9/00* (2006.01)

(21) Anmeldenummer: **16172012.3**

(22) Anmeldetag: **30.05.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Sellger, Roland**
**40885 Ratingen (DE)**

(72) Erfinder:
• **Sellger, Roland**
**40883 Ratingen (DE)**
• **Pfannholzer, David**
**40883 Ratingen (DE)**
• **Sellger-Pfannholzer, Anna**
**40883 Ratingen (DE)**

(74) Vertreter: **Feucker, Max Martin et al**
**Becker & Müller**
**Patentanwälte**
**Turmstraße 22**
**40878 Ratingen (DE)**

(54) **VERFAHREN ZUR BESTIMMUNG DER URHEBERSCHAFT VON GEMÄLDEN**

(57) Die vorliegende Erfindung betrifft ein Verfahren, umfassend zumindest die folgenden Schritte:

• Digitalisieren eines oder mehrere Bilder (Originale), bei denen die Urheberschaft des Autors X zweifelsfrei feststeht, in einer Weise, dass die Bilddaten (Pixel) reproduzierbar erfasst werden und jedem Bildpunkt Farbwerte zugeordnet werden, die sich bei einer Verschiebung und Drehung des Bildes in identischer Weise mitverschieben und mitdrehen,

• Digitalisieren mindestens eines Bildes, das zweifelsfrei nicht vom zu bestimmenden X Autor stammt (Fälschung), in gleicher Weise wie das mindestens eine Original,

• Digitalisieren eines oder mehrerer Bilder, von denen die Wahrscheinlichkeit der Zuordnung zum Autor X bestimmt werden soll, in gleicher Weise wie das mindestens eine Original,

• Zufälliges Auswählen von Bildausschnitten von jedem der digitalisierten Bilder automatisch über ein stochastisches Punktfeld oder manuell, wobei diese Bildausschnitte nahezu einfarbig sind (Gruppe "Einfarbig") oder einen kantenförmigen scharfen Farbübergang (Gruppe "Kante") oder einen eher gleichmäßigen Farbverlauf (Gruppe "Verlauf") haben,

• Ermitteln von charakteristischen Parametern aus diesen Bildausschnitten, wobei sich die Parameter bei einer Drehung des Bildes oder eine Verschiebung des Farbraums nicht ändern und bei einer Drehung des Farbraums nur unwesentlich ändern,

• im Sinne einer Klassifikation Zuordnung eines Zahlenwertes v1 zu den Originalbildern mittels statistischer Klassifizierungsmethoden auf Basis der charakteristischen Parameter,

• Zuordnung eines sich von dem Zahlenwert v1 unterscheidenden Zahlenwertes v2 zu den Fälschungen mittels statistischer Klassifizierungsmethoden auf Basis der charakteristischen Parameter,

• Berechnen eines zwischen v1 und v2 liegenden Zahlenwertes auf Basis der charakteristischen Parameter mittels statistischer Klassifizierungsmethoden für die Bilder, deren Urheberschaft zu bestimmen ist, wobei es der berechnete Zahlenwert ermöglicht, eine Wahrscheinlichkeit dafür anzugeben, dass das zu untersuchende Bild dem Autor X zuzuordnen oder nicht zuzuordnen ist.

Figur 1

**Beschreibung**

Die vorliegende Erfindung betrifft Vorrichtungen und Methoden zur Klassifizierung von Bildern nach der Urheberschaft. Die Zuordnung einer Urheberschaft ist von beträchtlicher gewerblicher und kunsthistorischer Bedeutung. Es ist Aufgabe der Erfindung Methoden zu beschreiben, die einem bestimmten Bild einen bestimmten Autor X mit einer Wahrscheinlichkeit p zuordnet. 1-p ist dann die Wahrscheinlichkeit, dass das Bild nicht vom genannten Autor stammt. Bei den Bildern handelt es sich nicht nur um kopiehafte Fälschungen eines Originals, sondern um Bilder die ein bestimmtes Thema, das auch abstrakt sein kann, wiedergeben, ohne dass eine Ähnlichkeit im Sinne einer Kopie vorliegt.

Diese Aufgabe wird erfindungsgemäß durch eines oder eine Kombination einzelner oder mehrerer der folgenden Merkmale gelöst:

- ein oder mehrere Bilder (Originale) bei denen die Urheberschaft des Autors X zweifelsfrei feststeht, in einer Weise digitalisiert werden, dass die Bilddaten (Pixel) reproduzierbar erfasst werden können und jedem Bildpunkt Farbwerte zugeordnet werden, die sich bei einer Verschiebung und Drehung des Bildes in identischer Weise mitverschieben und mitdrehen. Dafür eignen sich insbesondere Scanner.
- mindestens ein Bild vorliegt, dass zweifelsfrei nicht vom zu bestimmenden X Autor stammt (Fälschung) und in gleicher Weise wir die Originale digitalisiert wird. Originale und Fälschungen bilden den Trainingsdatensatz.
- ein oder mehrere Bilder vorliegen, von denen die Wahrscheinlichkeit der Zuordnung zum Autor X bestimmt werden soll und die in gleicher Weise wie die Originale digitalisiert werden. Dieses Bild oder diese Bilder bilden den Testdatensatz.
- eine genügend große Anzahl von Bildausschnitten von jedem der digitalisierten Bilder automatisch über ein stochastisches Punktfeld oder manuell möglichst zufällig ausgewählt werden, wobei diese Bildausschnitte nahezu einfarbig sind (Gruppe "Einfarbig") oder einen kantenförmigen scharfen Farbübergang haben (Gruppe "Kante") oder einen eher gleichmäßigen Farbverlauf (Gruppe "Verlauf") haben.
- aus diesen Bildausschnitten insbesondere mindestens fünf charakteristische Parameter ermittelt werden, die einem Künstler zugeordnet werden können und die sich deshalb bei einer Drehung des Bildes oder eine Verschiebung des Farbraums nicht ändern und bei einer Drehung des Farbraums nur unwesentlich ändern. Eine Unwesentliche Änderung liegt vor, wenn die Drehung des Farbraumes keinen Einfluss auf die Klassifizierung hat.
- im Sinne einer Klassifikation den Originalbildern eine Zahl zugeordnet wird und den Fälschungen ein anderer Zahlenwert zugeordnet wird und mittels statistischer Klassifizierungsmethoden für die Bilder, deren Urheberschaft zu bestimmen ist, ein Zahlenwert berechnet wird, der es ermöglicht eine Wahrscheinlichkeit dafür anzugeben, dass das zu untersuchende Bild dem Autor X zuzuordnen oder nicht zuzuordnen ist.

In den Offenlegungsschriften DE 10 2009 041 757 A1 und WO 2010 / 133 204 A1 werden bereits eine "Vorrichtung und Verfahren zur Identifizierung des Urhebers eines Kunstwerks" beschrieben. Wesentliche spezifische Angaben zu den Vorrichtungen oder den Verfahren fehlen aber, so dass die Lehre von einem verständigen Fachmann nicht nachzuvollziehen ist oder die Verfahren für das Ziel der Erfindung sogar ungeeignet sind. Beispielsweise fehlt die Einschränkung, welche Digitalisierungsmittel in Frage kommen. Kameras als Digitalisierungsmittel erfüllen diese Anforderung in der Regel nicht.

Die Bilder, deren Urheberschaft zu identifizieren ist, können abstrakt sein und können ganz verschiedene Farbgebung haben. Sollen daraus Charakteristika ermittelt werden, die dem Künstler und nicht dem Bild zuzuordnen sind, müssen diese Charakteristika invariant gegenüber Drehungen des Bildes und kleinen Verschiebungen des Bildes sein. Die bei der Digitalisierung möglichen Farbwerte eines Bildes bilden den Farbraum, wobei unterschiedliche Farbräume verwendet werden (RGB, CMYK, HSV, L*a*b, ...). Jeder dieser Farbräume besitzt 3 oder 4 Farbachsen. Eine Farbe wird durch einen Punkt in diesem 3- oder 4-dimensionalen Farbraum gekennzeichnet. Verwendet der Künstler zum Beispiel rot, statt grün, so verändert sich die Lage dieses Punktes im Farbraum. Die verwendete Farbe wird aber in der Regel nicht die Charakteristik des Künstlers bestimmen, es sei denn der Künstler benutzt immer die gleiche Farbgebung. Vielmehr machen nur solche charakteristischen Parameter einen Sinn, die sich nicht mit der Farbgebung ändern. Derartige Parameter müssen invariant oder wenigstens nahezu invariant gegenüber Verschiebungen und Drehungen im Farbraum sein. Alle in den o.g. Offenlegungsschriften genannten Methoden zur Extraktion von charakteristischen Merkmalen sind aber nicht invariant gegenüber kleinen Verschiebungen und Drehungen des Bildes und Verschiebungen und Drehungen im Farbraum und daher schon aus diesem Grunde ungeeignet.

Die in der o.g. Patentschrift angewandte Beschreibung einer Farbkante beinhaltet nur zwei Werte links und rechts von der Kante. An der Kante springt der Farbwert von einem Wert w1 auf einen Wert w2. Diese Werte sind aber mit den jeweiligen Farben verbunden (rot, grün oder rot-Schattierungen usw.). Bei einer anderen Farbgebung ändern sich die Werte. Sie sind also nicht charakteristisch für den Künstler, sondern allenfalls für das Bild. Außerdem sind sie nicht geeignet die Qualität einer Farbkante, beispielsweise die Kantenschärfe, zu ermitteln.

Die in den o.g. Offenlegungsschriften angewandte Beschreibung einer Farbkante mit einer Geraden a*x ist ebenfalls als charakteristisches Merkmal für den Künstler ungeeignet. Selbst wenn man unterstellt, dass der Autor der o.g. Patentschrift weitere Koeffizienten und nicht nur einen linearen Koeffizienten im Blick hatte, ändern sich diese bei einer Drehung des Bildes und bei einer Änderung der Farbe. Außerdem fehlen wesentliche Angaben zur Ermittlung der Richtung des Farbverlaufs ohne die Methode nicht nachvollzogen werden kann.

Die in den oben genannten Offenlegungsschriften angegebene Hough-Transformation ist Stand der Technik. Sie wird auf binarisierten Bildern angewandt. Auf welche Weise die Binarisierung angewandt wird, ist dabei für das Ergebnis der Houghtransformation wesentlich. Derartige Angaben fehlen in den oben genannten Offenlegungsschriften völlig, so dass diese Untersuchungsmethode von einem Fachkundigen nicht nachzuvollziehen ist. Es hat sich durch Versuche gezeigt, dass geometrische Formen nicht geeignet sind, die Urheberschaft zu bestimmen. Linien, Schnittwinkel, Kreise, Ellipsen, Kurven haben im Bild in der Regel einen Sinn, der mit dem Thema des Bildes verbunden ist. Vergleicht man Bilder mit unterschiedlichen Themen, so sind allein durch die Thematik die Parameter der Formen unterschiedlich, ohne dass dies etwas mit der Charakteristik des Künstlers zu tun. Allenfalls könnten Abweichungen von Idealformen (Linie, Kante, Kreis, Quadrat) für den Künstler charakteristisch sein. Die in der o.g. Patentschrift angegebenen Schnittwinkel ändern sich, wenn man die Binarisierung ändert. Außerdem sind sie kein Merkmal des Künstlers, sondern des Bildmotifs.

**Erläuterung der verwendeten Methoden zur Klassifizierung**

**1. Nomenklatur**

Die Bilder werden mit einem Digitalisierungsmittel in ein Datenarray umgewandelt. Dabei wird das zweidimensionale Bild in Pixel ($i$, $j$) zerlegt mit $i = 1...I$, $j = 1...J$. Die Anzahl der Pixel $K = I * J$ hängt von der Auflösung des Digitalisierungsmittels ab. Jedem Pixel werden je nach Farbmodell (RGB, HSV, CMYK, L*a*b,..., Grauwert) N ($N = 1,3,4$) Farbkanäle zugeordnet. Soweit es auf das verwendete Farbmodell nicht ankommt, wird es in der weiteren Beschreibung nicht speziell erwähnt. Jeder Farbkanal wird mit einer bestimmten Anzahl von Bits digitalisiert (Farbtiefe). Beispielsweise verwendet der Cruse-Scanner (Cruse Spezialmaschinen GmbH) als Farbmodell RGB mit einer Farbtiefe von 16Bit und mit einer örtlichen Auflösung von 300Pixel/Zoll. Im Weiteren werden die Farbwerte mit $c_n^{ij}$ bezeichnet, wobei der obere Index $ij$ für das betrachteten Pixel ($i$, $j$) steht und der untere Index für den Farbkanal entsprechend dem Farbmodell. Soweit es auf den Ort im Bild nicht ankommt, kann der obere Index weggelassen werden. Soweit es auf den Farbkanal nicht ankommt, kann der untere Index weggelassen werden.

**2. Bildausschnitte**

Aus dem Bild werden Bildausschnitte für die weitere Analyse ausgewählt. Die Auswahl der Bildausschnitte muss so erfolgen, dass dadurch sich nicht von vornherein eine Tendenz zu einer bestimmten Autorschaft ergibt. Beispielsweise wäre es nicht richtig bei einem Bild nur besonders sauber gemalte Kanten auszuwählen und weniger sorgfältig gemalte Kanten wegzulassen. Die Auswahl der Bildausschnitte sollte möglichst zufällig erfolgen. Dafür eignen sich beispielsweise Methoden der stochastischen Geometrie, die beispielsweise in D. Stoyan u.a., Stochastic Geometry and its Applications. J. Wiley & Sons, New York, 1995 beschrieben sind. Mit diesen Methoden kann ein zufälliges Punktfeld (Poissonfeld) mit einer vorgegebenen Dichte erzeugt werden. Diese zufälligen Punkte werden über das Bild gelegt und dann Ausschnitte in vorher festgelegter Weise um diesen Punkt ausgewählt. Jeder Bildausschnitt besteht aus K Bildpunkten, die im Weiteren als Pixel bezeichnet werden. Bei einem rechteckigen Ausschnitt mit I Pixel entlang der einen Seite und J-Pixel entlang der anderen Seite ist K=I*J. Der Bildausschnitt kann aber auch eine andere Form haben, beispielsweise kreisförmig oder polygonal sein. Die für die Analyse der Urheberschaft angewandten Methoden hängen nicht von der konkreten Form des Bildausschnitts ab.

Die ausgewählten Bildausschnitte werden in 4 Gruppen eingeteilt.: "Einfarbig", "Kante", "Verlauf", "Sonstiges". Die Zuordnung kann bereits visuell bei der Auswahl der Bildausschnitte erfolgen oder nach bestimmten Algorithmen.

Ein Bildausschnitt gehört der Gruppe "Einfarbig" an, wenn er offensichtlich keine Farbkanten und Farbverläufe enthält und der gemittelte Farbgradient $\rho$ (siehe Beschreibung Methode "GradientVerlauf") einen vorgegebenen Schwellwert unterschreitet.

Ein Bildausschnitt gehört der Gruppe "Kante" an, wenn er offensichtlich eine Farbkante enthält und die Methode "ColorKante" eine Kante detektiert (siehe Beschreibung der Methode "ColorKante").

Ein Bildausschnitt gehört der Gruppe Verlauf an, wenn er offensichtlich einen graduellen Farbverlauf enthält und der gemittelte Farbgradient $\rho$ (siehe Beschreibung Methode "GradientVerlauf") einen vorgegebenen Schwellwert überschreitet.

Ein Bildausschnitt gehört der Gruppe "Sonstige" an, wenn er nicht zu den Gruppen "Einfarbig", "Kante", "Verlauf" gehört. Die Ausschnitte der Gruppe "Sonstige" werden nicht weiter betrachtet.

Auf die Ausschnitte jeder Gruppe werden bestimmte mathematische Operationen angewandt, die zu charakteristischen Kennparametern für diesen Bildausschnitt führen. Die Anforderungen an die Operationen sind, dass sie invariant gegenüber räumlichen Drehungen des Bildes sind und dass sie invariant gegenüber Verschiebungen und weitgehend invariant gegenüber Drehungen im betrachteten Farbraum sind. Hierin unterscheiden sich die Operationen grundsätzlich von den in den oben genannten Offenlegungsschriften aufgeführten Methoden, die diese Anforderungen nicht erfüllen und daher schon aus diesen Gründen ungeeignet sind, die Urheberschaft festzustellen. Grundsätzlich können diese Operationen in jedem Farbraum angewandt werden. Es hat sich aber gezeigt, dass bestimmte Farbräume besonders geeignet sind, weil sie der physiologischen Farbwahrnehmung besonders gut entsprechen (L*a*b) oder weil sie einfach zu handhaben sind (RGB, Grauwert). Die Verwendung ausgewählter Farbmodelle wird im Ausführungsbeispiel gesondert erwähnt.

### 3. Gruppe "Einfarbig"

Auf Bildausschnitte der Gruppe "Einfarbig" werden die Methoden "Histogram" und "Intensity" angewandt.

3.1 Beschreibung der Methode "Histogram"

Die Methode "Histogram" hängt nicht von der konkreten Geometrie des Bildausschnittes ab. Jedes Pixel des Bildausschnitts hat einen eindeutigen Farbwert. Je nach Anzahl der verwendeten Farbkanäle wird ein ein- oder mehrdimensionaler Farbraum durch die Farbwerte der Pixel dem Bildausschnitt zugeordnet. Mit der Häufigkeit $h(c_n)$ wird die Anzahl der Pixel bezeichnet, die einen Punkt mit einem bestimmten Wert der Farbkoordinaten $c_n$ (RGB, ...) im Farbraum belegen.

Durch Projektion dieser Häufigkeitsverteilung auf die einzelnen Farbkanäle $c_n$ erhält man die Summenhäufigkeitsverteilung der Bildpunkte für diesen Kanal, die eine Funktion der Farbkoordinate $c_n$ ist. Diese Summenhäufigkeitsverteilung ist invariant gegenüber Drehungen des Bildausschnitts. Es hat sich gezeigt, dass sich diese Summenhäufigkeitsverteilung durch die Überlagerung von mehreren ($m = 1...M$) Gaußverteilungen

$$h_m(c_n) = a_{n,m} \exp\left(\frac{c_{n,m} - c_{n,m}^0}{b_{n,m}}\right)^2$$ approximieren lässt, wobei vorzugsweise M=2 Gaußverteilungen geeignet sind.

Jede Gaußverteilung wird durch 3 Parameter bestimmt: $a_{n,m}, b_{n,m}, c_{n,m}$. Der Parameter $a_{n,m}$ gibt die Höhe des Maximums der Verteilung an, der Parameter $c_{n,m}$ die Lage des Maximums auf der Farbachse $c_n$ und der Parameter $b_{n,m}$ die Breite der Verteilung. so dass bei m verwendeten Verteilungen je Farbkanal 3*m Parameter berechnet werden. Als weiterer Parameter wird der Korrelationskoeffizient $r_n^2$ für die Anpassung der Gaußverteilung an die tatsächliche Summenhäufigkeit für jeden Farbkanal berechnet. Die Parameter $r_n^2$, $b_{n,m}$ sowie die Differenzen $\Delta c_{n,mm'} = c_{n,m} - C_{n,m'}$ mit $m \pm m'$ sind invariant gegenüber Verschiebungen im Farbraum und weitgehend invariant gegenüber Drehungen im Farbraum. Diese N*(1+2M-1) Parameter werden für jeden Bildausschnitt mit der Methode "Histogram" berechnet. Als Farbraum wird im Ausführungsbeispiel der RGB-Farbraum (N=3) verwendet und die Anzahl der Gaußverteilungen beträgt M=2, so dass im Ausführungsbeispiel 3*4=12 Parameter mit der Methode "Histogram" ermittelt werden. Diese Parameter sind invariant gegenüber Drehungen des Bildausschnitts und Verschiebungen bzw. Drehungen im Farbraum.

3.2 Beschreibung der Methode "Intensity"

Handelsübliche Scanner, wie die Cruse-Scanner, arbeiten mit einer Farbtiefe von 16Bit, wobei die Farbtiefe auch verändert werden kann. Ein 3-dimensionaler Farbraum mit einer Farbtiefe von 16Bit besteht dann aus $2^{16*3}=2^{48}$ unterscheidbaren Punkten, das sind etwa $2.8*10^{14}$ Punkte. Die Zahl der betrachteten Pixel eines Bildausschnitts ist deutlich geringer. Verwendet man beispielsweise einen Bildausschnitt von 1000*1000 Pixel, so ergeben sich daraus $10^6$ Pixel. Mit der Häufigkeit $h(c_n)$ wird die Anzahl der Pixel bezeichnet, die einen Punkt mit bestimmten Farbkoordinaten $c_n$ (RGB,...) im Farbraum belegen. Da die Pixelzahl sehr viel kleiner als die möglichen Punkte im Farbraum ist, ist der Farbraum in der Regel sehr dünn belegt. Daher wird die Farbtiefe für jeden Kanal soweit reduziert, bis die Häufigkeit $h(c_n)$ mit der Punkte im Farbraum belegt sind groß genug ist, um eine statistische Analyse der Häufigkeitsverteilung der Farbwerte vorzunehmen. Für einfarbige Bildausschnitte hat sich eine Reduzierung der Farbtiefe um 4 Bit bewährt, für nicht einfarbige Bildausschnitte kann die Reduzierung der Farbtiefe auch größer sein. Die Methode "Intensity" berechnet die Häufigkeitsverteilung der Farbwerte der Pixel analog der Methode "Histogram". Als Farbraum wird der L*a*b Farbraum benutzt, wobei über den L-Kanal summiert wird. Die so entstehende Häufigkeitsverteilung ist eine 2-dimensionale Funk-

tion $h(c_a,c_b)$ wobei die beiden "Koordinaten" $c_a,c_b$ den a und b-Kanal im L*a*b Farbraum bezeichnen. Diese Häufigkeitsverteilung wird mit der maximalen Häufigkeit normiert, so dass die relativen Häufigkeitswerte zwischen 0 und 1 liegen.

Der Nullpunkt der Farbachsen wird so verschoben, dass er im Maximum der Häufigkeitsverteilung liegt: $\overline{c}_a = c_a - c_a^{max}$.

Diese Häufigkeitsverteilung ist invariant gegenüber Verschiebungen im Farbraum. Im Weiteren wird der Teil der normierten Häufigkeitsverteilung $h_{norm}(\overline{c}_a,\overline{c}_6)$ mit einem Wert größer einem Schwellwert *thresh* betrachtet:

$$S(\overline{c}_a,\overline{c}_b) = h_{norm}(\overline{c}_a,\overline{c}_b)\{h_{norm}(\overline{c}_a,\overline{c}_b) > thresh\}$$

Der Schwellwert *thresh* liegt im Intervall (0,1), vorzugsweise im Bereich zwischen 0.5 und <1. Im Ausführungsbeispiel ist *thresh* = 0.8 gewählt. Der natürliche Logarithmus $\ln(S(c_a,c_b))$ dieser Funktion wird durch Minimierung der quadratischen Abweichung an eine Funktion (quadratische Form) $f(\overline{c}_a,\overline{c}_b) = p_{00} + p_{10}\overline{c}_a + p_{01}\overline{c}_b + p_{11}\overline{c}_a\overline{c}_b + p_{20}\overline{c}_a^2 + p_{02}\overline{c}_b^2$ mit 6 Parametern $(p_{00},p_{10},p_{01},p_{11},p_{02},p_{20})$ angepasst. Die Funktion $f(c_a,c_b)$ stellt eine Fläche im 2-dimensionalen a-b-Farbraum dar. Aus den Koeffizienten wird eine Matrix B in folgender Weise gebildet:

$$B = \begin{pmatrix} p_{20} & 0.5p_{11} \\ 0.5p_{11} & p_{02} \end{pmatrix}$$

Die Determinante *von B* ist invariant gegenüber Drehungen im a-b-Farbraum. Die Krümmung *K* der Funktion $f(c_a,c_b)$ wird über die Beziehung:

$$K = \frac{f_{aa}f_{bb} - f_{ab}^2}{1 + f_a^2 + f_b^2} = \frac{p_{20}p_{02} - p_{11}^2}{1 + p_{10}^2 + p_{01}^2}$$

Berechnet, wobei die Indizes die Ableitung bezeichnen: $f_a = \dfrac{\partial f}{\partial a}$ und analog für weitere Indizes.

Dieser Parameter ist ebenfalls invariant gegenüber Drehungen des Farbraums. Die Determinante von B, der Korrelationskoeffizient $r^2$ der Approximation an die Funktion $f(\overline{c}_a,\overline{c}_b)$ und die Krümmung K, d.h. 3 Parameter werden mit der Methode "Intensity" für jeden ausgewählten Bildausschnitt berechnet. Diese Parameter sind invariant gegenüber Drehungen des Bildausschnitts und Verschiebungen bzw. Drehungen im Farbraum.

## 4. Gruppe "Kante"

Auf Bildausschnitte der Gruppe "Kante" werden die Methoden "ColorKante" und "GradientKante" angewandt.

4.1 Beschreibung der Methode "ColorKante"

Die Methode "ColorKante" berechnet Parameter, die den Grauwertverlauf normal zu einer Farbkante charakterisieren. Eine Farbkante ist ein sichtbar abrupter Übergang von einer Farbe zu einer anderen. Bei einer Bilddigitalisierung mit ausreichender Auflösung, wird erkennbar, dass der Übergang nicht sprunghaft, sondern stetig über einen kleinen Bildbereich normal zur Kante erfolgt. Die Ausdehnung dieses Bereiches betrage etwa *w* Pixel in jeder Richtung normal zur Kante. In einer Entfernung weiter als w Pixel von der Farbkante sind die Farbwerte jeweils annähernd konstant, dazwischen ändern sie sich in einer charakteristischen Weise. Den konstanten Farbwerten kommt für die Identifizierung der Autorenschaft keine Bedeutung zu, wohl aber dem Verlauf in der Übergangszone. Ziel der Methode "ColorKante" ist es Parameter, die die Übergangszone charakterisieren zu ermitteln. Diese Parameter sollen invariant gegenüber Drehungen des Bildes und gegenüber Verschiebungen und Drehungen des verwendeten Farbraums sein.

Da die Charakterisierung der Farbkante nicht von den verwendeten Farben abhängen soll, wird zunächst der Bildausschnitt in einen Grauwertverlauf umgewandelt. Das unvermeidliche Bildrauschen wird durch einen Medianfilter eliminiert. Kantendetektierung in Grauwertbildern ist im Programm Matlab, Dokumentation Image Processing toolbox, Funktion edge() beschrieben. Im Ausführungsbeispiel wird zunächst der Schwellwert nach Otsu, N. "A Threshold Selection Method from Gray-Level Histograms", IEEE Transactions on Systems, Man, and Cybernetics, Vol. 9, No. 1, 1979, pp. 62-66bestimmt und dann das Grauwertbild mit diesen Schwellwert binarisiert. Danach wird die Position der Kante durch die als "Zero-Cross" bekannte Methode bestimmt. Die n Kantenpixel (Kantenkoordinaten x,y) werden durch einen kubischen glättenden Spline approximiert (Funktion spaps in Matlab, Dokumentation Spline Toolbox, Funktion spaps()). Die Glättung erfolgt so, dass ein Optimum bezüglich der mittleren Abweichung des Splines von den Kantenpositionen und der "Rauheit" des Splines gesucht wird. Der dazu erforderliche Toleranzparameter *tol* wird entsprechend dem vorher bestimmten Bildrauschen gewählt. Das Bildrauschen wird anhand der Digitalisierung von normierten Farbcharts ermittelt, die gemeinsam mit dem zu untersuchenden Bild aufgenommen werden. Solange die örtliche Auflösung des verwendeten Scanners sich nicht ändert, ist das Bildrauschen annähernd konstant. Für den im Ausführungsbeispiel verwendeten Cruse-Scanner wurde im Ausführungsbeispiel *tol* = 0.15 ermittelt. Über die Splineapproximation kann durch Differentiation der Splinekurve der Normalenvektor entlang der Kante berechnet werden. Zu jedem der n Punkte auf der Kante werden dann die Koordinaten einer Linie normal zur Kante mit einer Länge *width* in Pixeln in beiden Richtungen zur Kante bestimmt. Der Parameter *width* muss so gewählt werden, dass er etwas größer als die Übergangszone ist: *width* > *w*. Solange diese Bedingung erfüllt ist, kommt es auf den Wert von *width* nicht weiter an. Die Grauwerte entlang dieser n Linien werden ermittelt, wobei die Zuordnung der Pixel zur Linie nach dem bekannten Bresenham-Algorithmus erfolgt. Erstreckt sich die Kante über n-Pixel, so werden auf diese Weise $n * (2 * width + 1)$ Grauwerte senkrecht zur Kante ermittelt. Diese Grauwerte werden dann über die n Linien gemittelt, so dass eine mittlere Grauwertverteilung normal zur Kante entsteht. Diese Grauwertverteilung wird mit dem maximalen und minimalen Grauwert auf das Intervall (0,1) normiert und mit *y* bezeichnet. Den $(2 * width + 1)$ Pixelkoordinaten senkrecht zur Kante wird eine x-Koordinate im Intervall (0,1) zugeordnet. Die charakteristischen Parameter des Farbübergangs werden dann so ermittelt, dass der normierte Grauwertverlauf *y* durch eine Funktion $y = f(x;a_i)$ mit Parametern $a_i$ approximiert wird. Als Funktionen $f(x;a_i)$ eignen sich alle Funktionen die im Intervall $x \in (0,1)$ stetig und monoton sind und einen Übergangsbereich in der Nähe von $x = x_0$ haben, dessen Breite durch mindestens einen Parameter beschrieben wird. Im Ausführungsbeispiel wird die

Funktion $\qquad f(x) = a + \dfrac{b(x - x_0)}{2\sqrt{(x - x_0)^2 + c^2}}$ verwendet. Diese Funktion besitzt die Eigenschaften:

$\lim\limits_{x \to \pm\infty} f(x) = a \pm \dfrac{b}{2}$ und $f(x_0) = a$. Der Parameter *c* kennzeichnet die Breite des Übergangs. Im Grenzfall $c \to 0$ entartet $f(x_0)$ zu einer Stufe. Eine andere geeignete Funktion wäre $f(x) = a + b \tanh(cx)$. Der Parameter c und der Korrelationskoeffizient $r^2$ der Approximation des tatsächlichen normierten Grauwertverlaufs *y* durch $f(x;a_i)$ bilden die 2 Parameter, die mit der Methode "ColorKante" berechnet werden. Diese Parameter sind invariant gegenüber Drehungen des Bildausschnitts und Verschiebungen bzw. Drehungen im Farbraum.

4.2 Beschreibung der Methode "GradientKante"

Anstelle des pixelweisen Grauwertverlaufs in der Methode ColorKante senkrecht zur Kante wird auf den Grauwerte des Bildausschnitts der in der Methode "GradientVerlauf" beschriebene pixelweise Gradient $\rho^{ij}$ verwendet. Dieser Wert ist in genügender Entfernung von der Kante 0 und besitzt im Kantenbereich einen starken Anstieg unmittelbar gefolgt von einem Abfall (Peak), d.h einen ($\delta$ - funktionsartigen Verlauf. Die charakteristischen Parameter des Farbübergangs werden so ermittelt, dass der analog der Methode "ColorKante" normierte und senkrecht zur Kantennormale gemittelte Gradient $\rho$ durch eine Funktion $\rho = f(x;a_i)$ mit Parametern $a_i$ approximiert wird. Als Funktionen $f(x;a_i)$ eignen sich alle Funktionen die im Intervall $x \in (0,1)$ stetig sind, einen peakartigen Übergangsbereich in der Nähe von $x = x_0$ haben und dessen Breite durch mindestens einen Parameter beschrieben werden kann. Im Ausführungsbeispiel wird

die Funktion $f(x) = \dfrac{b}{2\left(\sqrt{(x - x_0)^2 + c^2}\right)^3}$ verwendet. Diese Funktion besitzt die Eigenschaften: $\lim\limits_{x \to \pm\infty} f(x) = 0$

und $f(x_0) = \dfrac{b}{2c^3}$. Der Parameter c kennzeichnet die Breite des Peaks. Im Grenzfall $c \to 0$ entartet $f(x_0)$ zu einer $\delta$ -Funktion. Sie hängt mit der in der Methode "ColorKante" beschriebenen Funktion in der Weise zusammen, dass sie deren Ableitung darstellt.

Die 3 Parameter b und c sowie der Korrelationskoeffizient $r^2$ der Approximation werden durch die Methode "GradientKante" jedem Bildausschnitt zugeordnet. Diese Parameter sind invariant gegenüber Drehungen des Bildausschnitts und Verschiebungen bzw. Drehungen im Farbraum.

**5. Gruppe "Verlauf"**

Auf Bildausschnitte der Gruppe "Verlauf" werden die Methoden "ColorVerlauf" und "GradientVerlauf" angewandt.

5.1 Beschreibung der Methode "GradientVerlauf"

Die Methode berechnet für jeden Farbkanal $c_n$ des verwendeten Farbmodells den Gradienten. Dazu wird für jedes Pixel $(i, j)$ eine Umgebung von n*m Pixel betrachtet mit dem betrachteten Pixel $i, j$ als Mittelpunkt. Die Pixelwerte dieser Umgebung werden durch eine lineare Funktion

$$f(x_i, y_j) = P_0 + a^{ij} P_1(x) + b^{ij} P_1(y)$$

approximiert. Dabei sind $P_0$, $P_1$ Legendre-Polynome nullter und erster Ordnung. Die Parameter $a^{ij}, b^{ij}$ stellen die x- bzw. $\gamma$-Komponente des Gradienten dar. Sie ändern sich bei einer Drehung des Bildes. Eine aus $a^{ij}, b^{ij}$ gebildete Größe, die invariant gegenüber Bilddrehungen ist, ist:

$$\rho_n^{ij} = \sqrt{\left(a_n^{ij}\right)^2 + \left(b_n^{ij}\right)^2}$$

Jedem Pixel $(i, j)$ wird die Größe $\rho_c^{ij}$ als Gradient zugeordnet. Als charakteristischer Wert für die Methode "GradientVerlauf" wird der Mittelwert $\rho_c^{ij}$ über alle Pixel des Bildausschnitts und alle Farbkanäle gebildet und dieser Wert jedem Bildausschnitt als charakteristischer Parameter zugeordnet. Dieser Parameter ist invariant gegenüber Drehungen des Bildausschnitts und Verschiebungen bzw. Drehungen im Farbraum.

5.2 Beschreibung der Methode "ColorVerlauf"

Aus den mit der Methode "GradientVerlauf" berechneten Koeffizienten $a^{ij}, b^{ij}$ wird jedem Pixel $i, j$ des Bildausschnitts für jeden Farbkanal $c_n$ die *Größe* $\theta_n^{ij} = \arctan(b_n^{ij} / a_n^{ij})$ zugeordnet. Diese gibt die Orientierung des Gradienten in diesem Punkt $i, j$ des Bildausschnitts an. Der *Mittelwert* $\overline{\theta}_n$ von $\theta_n^{ij}$ über alle Pixel $i, j$ bestimmt die mittlere Richtung des Farbverlaufs für den Farbkanal $c_n$. Die Richtungen können sich für einzelne Farbkanäle unterscheiden. Das Bild wird um jeweils diesen *Winkel* $\overline{\theta}_n$ gedreht und die Farbwerte senkrecht zu $\overline{\theta}_n$ gemittelt. Diese Werte werden mit $y_n$ bezeichnet, und die Pixelkoordinaten entlang der Richtung $\overline{\theta}_n$ mit $x_n$. $y_n$, $x_n$ sind invariant gegenüber Drehungen des Bildausschnitts. Die Werte $y_n$ werden für jeden Farbkanal durch Beziehung: $\overline{y}_n = \dfrac{y_n - \min(y_n)}{\max(y_n) - \min(y_n)}$ auf das Intervall (0,1) normiert. Die so bestimmten Werte $\overline{y}_n$ werden für jeden Farbkanal $y_n(x_n)$ durch Minimierung der quadratischen Abweichung an eine monotone Funktion $f(x_n, a_{i,n})$ angepasst, wobei dieselbe Funktion wie in der Methode "ColorKante" gewählt wird. Die Parameter $a_{i,n}$ und der Korrelationskoeffizient $r_n^2$ der Approximation charakterisieren den Farbverlauf. Die Mittelwerte über alle Farbkanäle $c_n$ dieser Parameter $a_i, r^2$ werden jedem Bildausschnitt als charakteristische Werte zugeordnet. Im Ausführungsbeispiel sind das 4 Werte $a, b, c, r^2$. Der Parameter $x_0$ wird nicht verwendet, da er sich bei kleinen Verschiebungen des Bildausschnitts verändert. Kleine Verschiebungen des Bildausschnitts sind solche, die klein gegenüber der Ausdehnung des Ausschnitts sind. Diese Parameter sind invariant gegenüber Drehungen des Bildausschnitts und weitgehend invariant gegenüber Verschiebungen bzw. Drehungen im Farbraum.

## 6. Statistische Analyse

Jedem der $n_E$ Bildausschnitte der Gruppe "Einfarbig" werden insbesondere mindestens 3, bevorzugt mindestenst 5, ganz besonders bevorzugt mindestens 15 Parameter zugeordnet. Jedem der $n_K$ Bildausschnitte der Gruppe "Kante" werden insbesondere mindestens 2, bevorzugt mindestens 5 Parameter zugeordnet. Jedem der $n_V$ Bildausschnitte der Gruppe "Verlauf" werden insbesondere mindestens 2, bevorzugt mindestens 5 Parameter zugeordnet. Diese Parameter sind invariant gegenüber Drehungen des Bildes oder kleinen Verschiebungen der Bildausschnitte und weitgehend invariant gegenüber Verschiebungen und Drehungen im Farbraum. Da die Art und die Anzahl der Parameter von der Gruppe der Ausschnitte abhängen, wird die statistische Analyse zunächst für jede Bildgruppe getrennt durchgeführt. Dabei können die Parameter innerhalb einer Bildgruppe noch einen Wichtungsfaktor erhalten.

Ziel der statistischen Analyse ist es, einem Bild, dessen Urheberschaft nicht zweifelsfrei feststeht, eine Wahrscheinlichkeit zuzuordnen, dass der Künstler $X$ Urheber ist. Es sei $L_1$ die Anzahl der vorliegenden Bilder, deren Urheberschaft in dem Sinne bekannt ist, dass sie entweder dem Künstler $X$ zuzuordnen sind ($L_o < L_1$ Bilder, Originale) oder nicht zuzuordnen sind ($L_F = L_1 - L_o < L_1$ Bilder, Fälschungen) und $L_2$ sei die Anzahl der Bilder, deren Urheberschaft zu bestimmen ist. Für diese Bilder werden Bildausschnitte ausgewählt, die den Gruppen "Einfarbig", "Kante" oder "Verlauf" zugeordnet werden können und es werden die in der Beschreibung der Methoden über die einzelnen Bildgruppen genannten charakteristischen Parameter ermittelt. Alle Parameter der Originalbilder bilden die Klasse "O", alle Parameter der Fälschungen bilden die Klasse "F" und die Parameter dieser Klassen bilden den Trainingsdatensatz. Auf diese Klassen werden statistische Methoden zur Klassifizierung angewandt. Diese Methoden sind Stand der Technik (siehe beispielsweise Matlab, Dokumentation Statistics Toolbox) und müssen hier nicht näher beschrieben werden. Im Ausführungsbeispiel wird die Diskriminanzanalyse angewendet. Der Klasse der Originalbilder wird der Wert 1 zugeordnet, der Klasse der Fälschungen wird der Wert 0 zugeordnet. Die Klassifizierungsmethode ermittelt einen "Klassifikator" der Scorewerte für die Bildausschnitte jeder Gruppe berechnet, die die Wahrscheinlichkeit der Zuordnung zur Klasse der "Originale" oder "Fälschungen" angeben. Diese Scorewerte aller Ausschnitte der einzelnen Gruppen werden gemittelt und ergeben einen Gesamtscorewert. Es ist dabei möglich, bei der Mittelung den einzelnen Gruppen unterschiedliche Wichtungsfaktoren zu geben. Entsprechend diesen Gesamtscorewerten aller Ausschnitte eines Bildes wird dieses der Klasse Originale "O" (Scorewert >0.5) oder der Klasse Fälschungen "F" (Scorewert<0.5) zugeordnet. Entspricht die Klassenzuordnung des Trainingsdatensatzes für einzelne Bilder nicht der tatsächlichen Herkunft, ist für dieses Bild die Anzahl der Bildausschnitte zu erhöhen oder es sind problematische Bildausschnitte zu identifizieren und wegzulassen oder die genannten Wichtungsfaktoren sind insgesamt für alle Methoden und Gruppen in gleicher Weise zu ändern. Entspricht die Klassenzuordnung des Trainingsdatensatzes der tatsächlichen Herkunft, so wird der Klassifikator auf die Bildausschnitte der $L_2$ Bilder angewandt, deren Herkunft unbekannt ist. Diese bilden den Testdatensatz. Entsprechend den Scorewerten wird das Bild dann mit einer bestimmten Wahrscheinlichkeit der Gruppe "Originale" oder "Fälschungen" zugeordnet.

## 7. Ausführungsbeispiel

Im Ausführungsbeispiel werden 13 Bilder untersucht. 10 Bilder stammen zweifelsfrei von Johann Georg Müller. 3 weitere Bilder sind Fälschungen. Die Bilder wurden mit einem Cruse-Scanner digitalisiert (Auflösung 300 Pixel/Zoll, 16 Bit Farbtiefe). Über alle Bilder wurden mittels eines stochastischen Punktfeldes, wie es beispielsweise in /5/ D. Stoyan u.a., Stochastic Geometry and its Applications. J. Wiley & Sons, New York, 1995. beschrieben ist, 164 Bildausschnitte der Gruppe "Einfarbig", 109 Bildausschnitte der Gruppe "Kante" und 92 Bildausschnitte der Gruppe "Verlauf" ausgewählt. Aus diesen Bildausschnitten wurden jeweils 50% (gerundet auf die nächstkleinere natürliche Zahl) als Trainingsdatensatz gewählt. Die restlichen Bildausschnitte wurden als Testdatensatz verwendet.

Auf die Bildausschnitte der Gruppe "Einfarbig" wurde die Methoden "Histogram" mit M=2 Gaußverteilungen im RGB-Farbraum und die Methode "Intensity" mit einer Reduzierung der Farbtiefe um 4 Bit im ab-Unterraum des L*a*b Farbraums und einem Schwellwert *thresh* = 0.8 angewandt. Dies ergibt je Bildausschnitt 15 Parameter, die invariant gegenüber Drehungen und kleinen Verschiebungen des Bildes und invariant gegenüber Drehungen und Verschiebungen des Farbraums sind. Bild 1 zeigt die Darstellung der Intensitätsverteilung im a-b-Farbraum für einen Ausschnitt (Original und Fälschung).

Auf die Bildausschnitte der Gruppe "Kante" wurden die Methoden "ColorKante" mit der Funktion

$$f(x) = a + \frac{b(x - x_0)}{2\sqrt{(x - x_0)^2 + c^2}}$$ und "GradientKante" mit der Funktion $$f(x) = \frac{b}{2\left(\sqrt{(x - x_0)^2 + c^2}\right)^3}$$ angewandt. Dies ergibt je Bildausschnitt 5 Parameter, die invariant gegenüber Drehungen und kleinen Verschiebungen des Bildes und invariant gegenüber Drehungen und Verschiebungen des Farbraums sind. Die Farbkante eines Bildausschnitts ist in Falschfarbendarstellung für die 3 Farbkanäle und den Mittelwert in Bild 2a dargestellt. Bild 2b zeigt die entsprechende Anpassung des Kantenverlaufs an die ausgewählte Funktion.

Auf die Bildausschnitte der Gruppe "Verlauf" wurden die Methoden "GradientVerlauf" und "ColorVerlauf" im RGB-Farbraum angewandt. Dies ergibt je Bildausschnitt 5 Parameter, die invariant gegenüber Drehungen und kleinen Verschiebungen des Bildes und invariant gegenüber Drehungen und Verschiebungen des Farbraums sind. In Bild 3 ist der Farbverlauf in Falschfarbendarstellung für die verschiedenen Farbkanäle eines Bildausschnittes dargestellt.

Für die statistische Analyse wurden alle Wichtungsfaktoren zu 1 gesetzt. Verwendet wurden aus der Matlab-Statistiktoolbox eine lineare Regression, ein stufenweiser Fit und die Diskrimanzanalyse mit und ohne vorheriger Hauptkomponentenanalyse. Die Ergebnisse unterscheiden sich nur unwesentlich.

In Bild 4a bis 4c sind die Ergebnisse der gruppenweisen Klassifizerungsanalyse dargestellt.

Aus dem Mittelwert über die gruppenweisen Scorewerte ergibt sich das Endergebniss der Klassifizierungsanalyse. Dieses ist in Bild 5 dargestellt. Die Trefferquote beträgt 100%, wobei bei zwei Bildern (F5 und F6) die Scorewerte nahe dem Grenzwert 0.5 liegen. Je nach Forderung einer bestimmten statistischen Sicherheit müssten für diese Bilder weitere Ausschnitte ausgewählt werden.

Die Figuren zeigen folgendes jeweils schematisch.

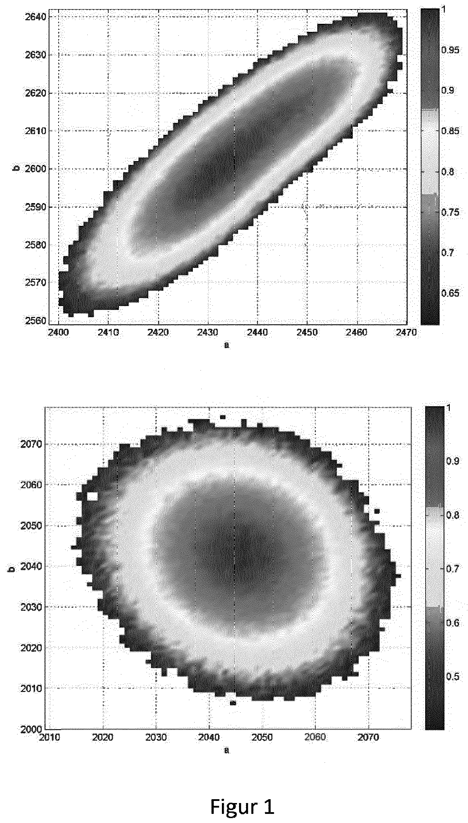

Fig. 1: Darstellung der Intensitätsverteilung im a-b-Farbraum für einen Ausschnitt, oberes Bild Bildausschnitt eines Originals, unteres Bild Bildausschnitt einer Fälschung. An diese Verteilung wird die im Abschnitt "Intensity" beschriebene Funktion angepasst. Im Zentrum ist die durch die Graustufen angegebene Intensität am höchsten und fällt nach außen ab.

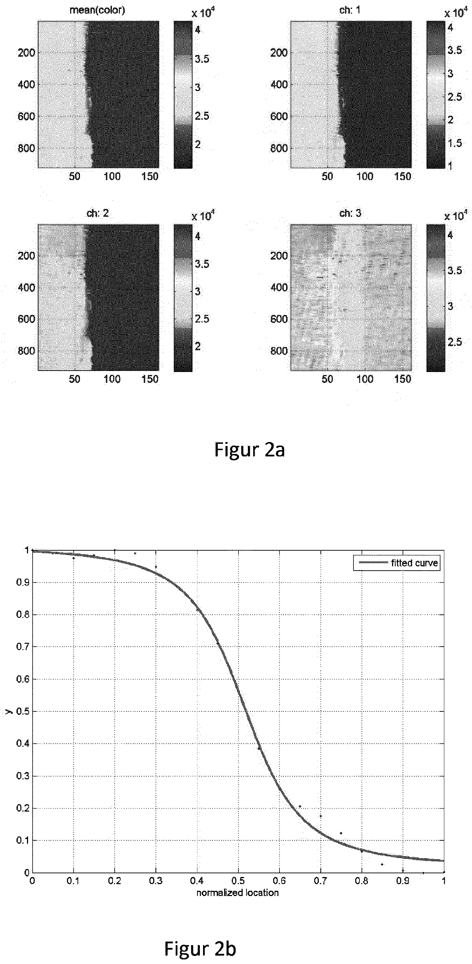

Fig. 2a: Falschfarbendarstellung einer Farbkante, wobei die durch die Graustufen angegebene Intensität jeweils auf der linken Seite größer ist.

Fig. 2b: Angepasste Funktion normal zur Kante.

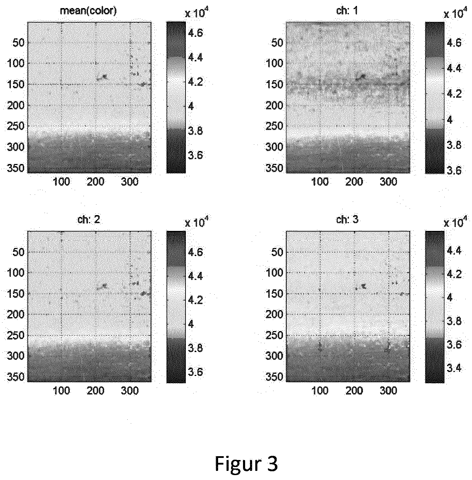

Fig. 3: Farbverlauf Falschfarbendarstellung , wobei die durch die Graustufen angegebene Intensität jeweils auf der linken Seite größer ist.

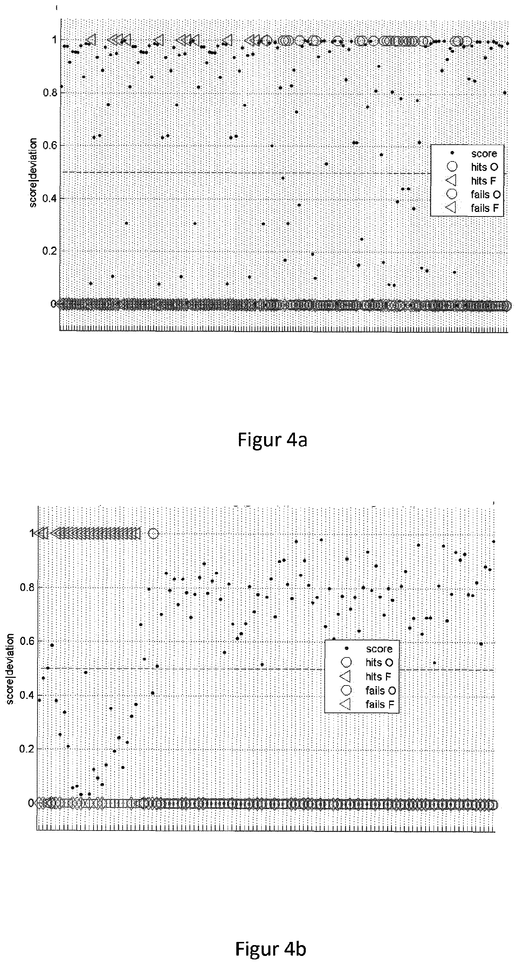

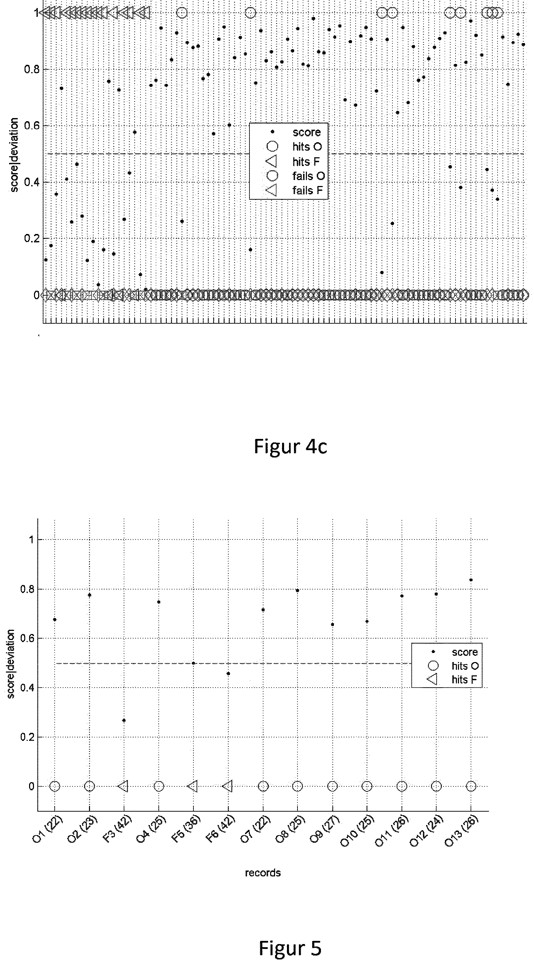

Figur 4a: Gruppenweise Klassifizierung der Gruppe "Einfarbig". Auf der Abszisse sind alle 164 Bildausschnitte dieser Gruppe dargestellt. Auf der Ordinate sind als schwarze Punkte die mit der Diskriminanzanalyse berechneten Scorewerte dargestellt. Ein Scorewert kleiner oder gleich 0.5 führt zu einer Klassifizierung als Fälschung (F), ein Wert >0.5 zu einer Klassifizierung als Original. Weiter sind auf der Ordinate die Abweichungen bei der Klassifizierung gegenüber der tatsächlichen Klasenzugehörigkeit dargestellt, diese kann 0 betragen (die Klassifizierung ist zutreffend) oder 1 betragen (die Klassifizierung ist falsch). Datensätze aus Originalen sind mit dem Kreis dargestellt, Datensätze aus Fälschungen werden durch Dreiecke dargestellt. Trainingsdatensätze sind grün markiert, Treffer in der Klassifizierung blau und falsche Klassifizierungen rot. Die Trefferquote für die Gruppe Einfarbig ist 77%.

Figur 4b: Gruppenweise Klassifizierung der Gruppe "Kante". Die Symbole und Bildbeschriftungen entsprechen dem Bild 4a. Die Trefferquote für die Gruppe "Kante" ist 79%.

Figur 4c: Gruppenweise Klassifizierung der Gruppe "Verlauf". Die Symbole und Bildbeschriftungen entsprechen dem Bild 4a. Die Trefferquote für die Gruppe "Verlauf" ist 73%.

Figur 5: Klassifizierung Diskriminanzanalyse. Die Abszisse gibt den Bildstatus (O für Original und F für Fälschung), die Bildnummer (1-13) und in Klammern die Anzahl der verwendeten Bildausschnitte dieses Bildes an. Dabei sind die Ergebnisse der gruppenweisen Analyse wie im Punkt Statistik beschrieben zusammengefasst. Auf der Ordinate sind die mit der Diskriminanzanalyse berechneten Scorewerte angegeben. Bei einem Scorewert kleiner gleich 0.5 wird das Bild der Klasse der Fälschungen und bei einem Scorewert >0.5 der Klasse der Originale zugeordnet. Ebenfalls mit blauen Kreisen (für Originale) bzw. mit blauen Dreiecken für die Fälschungen ist die Abweichung der Klassifizierung von der tatsächlichen Zuordnung markiert. Da die Trefferquote 100% ist, sind alle Abweichungen 0. Fehlerhafte Zuordnungen werden durch die verwendete Software mit roten Symbolen und einer Abweichung von 1 dargestellt, diese treten aber nur in den Gruppen auf. und für die Gruppe "Verlauf" ist 73%.

**Patentansprüche**

1. Verfahren, umfassend zumindest die folgenden Schritte:

   • Digitalisieren eines oder mehrere Bilder (Originale), bei denen die Urheberschaft des Autors X zweifelsfrei feststeht, in einer Weise, dass die Bilddaten (Pixel) reproduzierbar erfasst werden und jedem Bildpunkt Farbwerte zugeordnet werden, die sich bei einer Verschiebung und Drehung des Bildes in identischer Weise mitverschieben und mitdrehen,
   • Digitalisieren mindestens eines Bildes, das zweifelsfrei nicht vom zu bestimmenden X Autor stammt (Fälschung), in gleicher Weise wie das mindestens eine Original,
   • Digitalisieren eines oder mehrerer Bilder, von denen die Wahrscheinlichkeit der Zuordnung zum Autor X bestimmt werden soll, in gleicher Weise wie das mindestens eine Original,
   • Zufälliges Auswählen von Bildausschnitten von jedem der digitalisierten Bilder automatisch über ein stochastisches Punktfeld oder manuell, wobei diese Bildausschnitte nahezu einfarbig sind (Gruppe "Einfarbig") oder einen kantenförmigen scharfen Farbübergang (Gruppe "Kante") oder einen eher gleichmäßigen Farbverlauf (Gruppe "Verlauf") haben,
   • Ermitteln von charakteristischen Parametern aus diesen Bildausschnitten, wobei sich die Parameter bei einer Drehung des Bildes oder eine Verschiebung des Farbraums nicht ändern und bei einer Drehung des Farbraums nur unwesentlich ändern,
   • im Sinne einer Klassifikation Zuordnung eines Zahlenwertes v1 zu den Originalbildern mittels statistischer Klassifizierungsmethoden auf Basis der charakteristischen Parameter,
   • Zuordnung eines sich von dem Zahlenwert v1 unterscheidenden Zahlenwertes v2 zu den Fälschungen mittels statistischer Klassifizierungsmethoden auf Basis der charakteristischen Parameter,
   • Berechnen eines zwischen v1 und v2 liegenden Zahlenwertes auf Basis der charakteristischen Parameter mittels statistischer Klassifizierungsmethoden für die Bilder, deren Urheberschaft zu bestimmen ist, wobei es der berechnete Zahlenwert ermöglicht, eine Wahrscheinlichkeit dafür anzugeben, dass das zu untersuchende Bild dem Autor X zuzuordnen oder nicht zuzuordnen ist.

2. Verfahren nach Anspruch 1, wobei aus den Bildausschnitten der Gruppe "Einfarbig" für jeden Farbkanal die Häufigkeitsverteilung der Farbwerte des Farbkanals bestimmt wird und diese durch eine oder mehrere Gaußverteilungen approximiert werden und ein Teil der Parameter der Verteilungen als charakteristische Parameter für die statistische Analyse verwendet wird.

3. Verfahren nach Anspruch 1 oder 2, wobei aus den Bildausschnitten der Gruppe "Einfarbig" im a*b-Unterraum des L*a*b-Farbraum eine Häufigkeitsverteilung der a-b-Farbwerte ermittelt wird und diese an eine quadratische Form angepasst wird und aus den Koeffizienten der quadratischen Form charakteristische Parameter berechnet werden, die für die statistische Analyse verwendet werden.

4. Verfahren nach einem der vorhergehenden Ansprüche, wobei aus den Bildausschnitten der Gruppe "Kante" normal zur Kante eine eindimensionale Repräsentation des Verlaufes senkrecht zur Kante ermittelt wird und diese Repräsentation durch eine monotone Funktion approximiert wird, deren Parameter den Verlauf in Kantennähe beschreiben und diese Parameter für die weitere statistische Analyse verwendet werden.

5. Verfahren nach einem der vorhergehenden Ansprüche, wobei aus den Bildausschnitten der Gruppe "Kante" normal zur Kante eine eindimensionale Repräsentation des Grauwertgradienten senkrecht zur Kante ermittelt wird und diese Repräsentation durch eine peakartige (delta-artige) Funktion approximiert wird, deren Parameter den Verlauf in Kantennähe beschreiben und diese Parameter für die weitere statistische Analyse verwendet werden.

6. Verfahren nach einem der vorhergehenden Ansprüche, wobei aus den Bildausschnitten der Gruppe "Verlauf" eine gegenüber Bilddrehungen invariante Repräsentation des Farbgradienten berechnet wird, und der Mittelwert dieser Repräsentation für die weitere statistische Analyse verwendet wird.

7. Verfahren nach einem der vorhergehenden Ansprüche, wobei aus den Bildausschnitten der Gruppe "Verlauf" in Richtung des Gradienten des Farbverlaufs eine eindimensionale Repräsentation des Farbverlaufs gebildet wird und diese an eine monotone Funktion angepasst werden und die Parameter dieser Funktion für die weitere statistische Analyse verwendet werden.

Figur 1

Figur 2a

Figur 2b

Figur 3

Figur 4a

Figur 4b

Figur 4c

Figur 5

Europäisches
Patentamt

European
Patent Office

Office européen
des brevets

**EUROPÄISCHER RECHERCHENBERICHT**

Nummer der Anmeldung

EP 16 17 2012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2009 041757 A1 (SCHOLZEN WERNER [DE]) 9. Dezember 2010 (2010-12-09) * 0006, 0017, 0027, 0010, 0047-0049 , 0054, 0015 * ----- | 1-7 | INV. G06K9/34 G06K9/00 |
| Y | SABLATNIG R ET AL: "Hierarchical classification of paintings using face- and brush stroke models", PATTERN RECOGNITION, 1998. PROCEEDINGS. FOURTEENTH INTERNATIONAL CONFE RENCE ON BRISBANE, QLD., AUSTRALIA 16-20 AUG. 1998, LOS ALAMITOS, CA, USA,IEEE COMPUT. SOC, US, Bd. 1, 16. August 1998 (1998-08-16), Seiten 172-174, XP010297463, DOI: 10.1109/ICPR.1998.711107 ISBN: 978-0-8186-8512-5 * 2- 3 * ----- | 1-7 | |
| A | Cristina Darolti: "Entscheidung Patentanmeldung (EP10728585), ausgegeben am 13-12-2013, 2", , 13. Dezember 2012 (2012-12-13), XP055323808, Gefunden im Internet: URL:https://register.epo.org/application?n umber=EP10728585&lng=en&tab=doclist [gefunden am 2016-11-28] ----- | 1 | RECHERCHIERTE SACHGEBIETE (IPC) G06K |
| A | JOHNSON C R ET AL: "Image processing for artist identification", IEEE SIGNAL PROCESSING MAGAZINE, IEEE SERVICE CENTER, PISCATAWAY, NJ, US, Bd. 25, Nr. 4, 1. Juli 2008 (2008-07-01), Seiten 37-48, XP011228189, ISSN: 1053-5888, DOI: 10.1109/MSP.2008.923513 ----- -/-- | 1 | |

Der vorliegende Recherchenbericht wurde für alle Patentansprüche erstellt

| Recherchenort | Abschlußdatum der Recherche | Prüfer |
|---|---|---|
| Den Haag | 29. November 2016 | Versluis, Anton |

EPO FORM 1503 03.82 (P04C03)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes Dokument

Europäisches
Patentamt

European
Patent Office

Office européen
des brevets

# EUROPÄISCHER RECHERCHENBERICHT

Nummer der Anmeldung

EP 16 17 2012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | BEREZHNOY I E ET AL: "Authentic: Computerized Brushstroke Analysis", IEEE INTERNATIONAL CONFERENCE ON MULTIMEDIA AND EXPO, 2005. ICME 2005. AMSTERDAM, THE NETHERLANDS, 06-08 JULY 2005, IEEE, PISCATAWAY, NJ, USA, 6. Juli 2005 (2005-07-06), Seiten 1586-1588, XP010843976, DOI: 10.1109/ICME.2005.1521739 ISBN: 978-0-7803-9331-8 ----- | 1 | |
| A | MELZER T ET AL: "Stroke detection of brush strokes in portrait miniatures using a semi-parametric and a model based approach", PATTERN RECOGNITION, 1998. PROCEEDINGS. FOURTEENTH INTERNATIONAL CONFE RENCE ON BRISBANE, QLD., AUSTRALIA 16-20 AUG. 1998, LOS ALAMITOS, CA, USA,IEEE COMPUT. SOC, US, Bd. 1, 16. August 1998 (1998-08-16), Seiten 474-476, XP010297588, DOI: 10.1109/ICPR.1998.711184 ISBN: 978-0-8186-8512-5 ----- | 1 | RECHERCHIERTE SACHGEBIETE (IPC) |
| A | US 6 017 218 A (BRIGHT THOMAS J [US]) 25. Januar 2000 (2000-01-25) ----- -/-- | 1 | |

Der vorliegende Recherchenbericht wurde für alle Patentansprüche erstellt

| Recherchenort | Abschlußdatum der Recherche | Prüfer |
|---|---|---|
| Den Haag | 29. November 2016 | Versluis, Anton |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

## EUROPÄISCHER RECHERCHENBERICHT

Nummer der Anmeldung

EP 16 17 2012

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LYU ET AL: "A digital technique for art authentication", PROCEEDINGS OF THE NATIONAL ACADEMY OF SCIENCES, NATIONAL ACADEMY OF SCIENCES, US, Bd. 101, Nr. 49, 7. Dezember 2004 (2004-12-07), Seiten 17006-17010, XP002601838, ISSN: 0027-8424, DOI: 10.1073.PNAS.0406398101 [gefunden am 2004-12-07] ----- | 1 | |
| A | "IMAGE PROCESSING FOR ARTIST IDENTIFICATION BRUSHWORK IN THE PAINTINGS OF VINCENT VAN GOGH", FIRST INTERNATIONAL WORKSHOP ON IMAGE PROCESSING FOR ARTIST IDETIFICATION,, 14. Mai 2007 (2007-05-14), Seiten 1-25, XP002601839, [gefunden am 2007-05-14] ----- | 1 | |
| A | DUDA R ET AL: "Pattern Classification, chapter 9: Algorithm-Independent Machine Learning", 1. Januar 2001 (2001-01-01), PATTERN CLASSIFICATION, NEW YORK, JOHN WILEY & SONS, US, PAGE(S) 453 - 515, XP002472161, ISBN: 978-0-471-05669-0 ----- | 1 | RECHERCHIERTE SACHGEBIETE (IPC) |
| A | KR 2003 0006817 A (KOREA ELECTRONICS TELECOMM [KR]) 23. Januar 2003 (2003-01-23) ----- | 1 | |

Der vorliegende Recherchenbericht wurde für alle Patentansprüche erstellt

| Recherchenort | Abschlußdatum der Recherche | Prüfer |
|---|---|---|
| Den Haag | 29. November 2016 | Versluis, Anton |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 2012

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-11-2016

| Im Recherchenbericht angeführtes Patentdokument | Datum der Veröffentlichung | Mitglied(er) der Patentfamilie | Datum der Veröffentlichung |
|---|---|---|---|
| DE 102009041757 A1 | 09-12-2010 | CA 2761382 A1<br>CN 102439605 A<br>DE 102009023756 A1<br>DE 102009041757 A1<br>DE 112010002056 A5<br>EP 2433245 A1<br>JP 2012527665 A<br>KR 20120024799 A<br>RU 2011149157 A<br>US 2012072454 A1<br>WO 2010133204 A1 | 25-11-2010<br>02-05-2012<br>05-01-2011<br>09-12-2010<br>31-05-2012<br>28-03-2012<br>08-11-2012<br>14-03-2012<br>27-06-2013<br>22-03-2012<br>25-11-2010 |
| US 6017218 A | 25-01-2000 | KEINE | |
| KR 20030006817 A | 23-01-2003 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- DE 102009041757 A1
- WO 2010133204 A1

**In der Beschreibung aufgeführte Nicht-Patentliteratur**

- **D. STOYAN.** Stochastic Geometry and its Applications. J. Wiley & Sons, 1995
- **OTSU, N.** A Threshold Selection Method from Gray-Level Histograms. *IEEE Transactions on Systems, Man, and Cybernetics,* 1979, vol. 9 (1), 62-66